# EUROPEAN PATENT APPLICATION

(11) **EP 2 106 061 A1**
(43) Date of publication of application: **30.09.2009**
(21) Application number: 08715125.4
(22) Date of filing: 29.02.2008
(51) Int. Cl.: H04L 12/16

(54) **METHOD AND SYSTEM FOR THE SERVICE COMPATIBILITY**

(30) Priority: 07.03.2007 CN 200710085952; 15.03.2007 CN 200710089205; 16.03.2007 CN 200710085157; 24.03.2007 CN 200710089961; 16.04.2007 CN 200710096925; 11.05.2007 CN 200710104390
(71) Applicant: Huawei Technologies Co., Ltd., Longgang District, Shenzhen Guangdong Province 518129 (CN)
(72) Inventor: SHI, Youzhu, Shenzhen Guangdong Province 518129 (CN)
(74) Representative: Pfenning, Meinig & Partner GbR
(86) International application number: PCT/CN2008/070389
(87) International publication number: WO 2008/106885

(57) **Abstract**

A method and system for implementing the services compatibility is disclosed. It includes: the Service-Calling Session Control Function S-CSCF receives the initial request message of the Session Initiation Protocol SIP, and sends the invocation request message to the first application service (501); the first application server receives the invocation request message, and performs the corresponding service process, sends the invocation request reply message to the S-CSCF, which has the current service invoking status information (502); according to the received current service invoking status information and the preset service compatibility associated description data, the S-CSCF judges whether or not to allow invoking the second application server associated description data, if allowed, then it invokes the second application server associated service (503).

## Description

### FIELD OF THE INVENTION

The present invention relates to IP Multimedia Subsystem (IMS) network, in particular, to a method and system for implementing service compatibility.

### BACKGROUND

IMS network is an IP multimedia subsystem network defined by the 3rd Generation Partnership Project (3GPP) standard, which is a target network that actualizes packet voice and packet data and provides a uniform multimedia service and application for a 3rd Generation (3G) mobile network.

The IMS network utilizes the Session Initiation Protocol (SIP) of application layer control protocols as a calling control signaling, for establishing, modifying and terminating a multimedia session or calling. The core of the multimedia session, defined by the Internet Engineering Task Force (IETF) standard organization, includes multimedia conference, remote education, Internet telephone call, etc; while, the separation of service management, session control and bearer access is achieved by using an IP packet domain as a bearer channel for its control signaling and media transmission.

At present, other international standard organizations, such as International Telecommunication Union-Telecommunication Standardization Sector (ITU-T), European Telecommunications Standards Institute (ETSI), etc., also employs IMS network as the core network of next generation network defined thereby.

In the IMS network, the session layer and the service layer is separate, and the IMS network supplies necessary method for the invocation of a service, involving Service-Call Session Control Function (S-CSCF) and Application Server (AS).

A method for providing services in a current IMS network is briefly described as follows.

First of all, possible services or service set are defined. When a user orders/modifies a service subscription relation, user-specific service data is created in the form of Initial Filter Criteria (iFC). When the S-CSCF receives a SIP initial request, the iFC is executed according to current session situation and the received SIP initial request message to determine an application server corresponding to the current session situation and the SIP initial request, and to deliver the received SIP initial request to the determined application server.

In actual application, a user in the IMS network usually subscribes to more than one iFCs for a plurality of services, which may conflict with one another. For example, a free telephone service cannot be simultaneously provided with other services, i.e., upon the user uses a free telephone service, no other service can be provided to the user. However, current IMS networks fail to solve the service-conflicting issue.

It can be seen from the above description that, in the case that one AS can provide more than one services, the prior art fails to address the problem concerning service conflicts between a plurality of services.

Further, when an application server is invoked; the service supplied by the server is unlikely to be invoked successfully.

### SUMMARY

Accordingly, an embodiment of the present invention provides a method for implementing service compatibility, for enhancing the compatibility of IMS network service and reducing service conflicts.

An embodiment of the present invention provides a system for implementing service compatibility, for enhancing the compatibility of IMS network service and reducing service conflicts.

An embodiment of the present invention provides an apparatus, for enhancing the compatibility of IMS network service and reducing service conflicts.

The solution of the embodiment of the present invention is particularly implemented as follows:

A method for implementing service compatibility is provided, including:
sending, by an Service-Calling Session Control Function (S-CSCF), an invocation request message to a first application server;
receiving, by the S-CSCF, an invocation request reply message carrying current service invoking status information returned by the first application server; and
determining, by the S-CSCF, according to the received current service invoking status information and preset service compatibility associated description data, whether or not to allow invoking a second application server associated service described in the service compatibility associated description data, and invoking the second application server associated service, if the result of the determination indicates that the second application server is allowed to be invoked.

A system for implementing service compatibility is provided, including: an S-CSCF and a first application server, where the S-CSCF is configured to send an invocation request message to the first application server, and the first application server is configured to receive the invocation request message and send an invocation request reply message to the S-CSCF.

The first application server is further configured to carry current service invoking status information in the invocation request reply message sent to the S-CSCF;

The S-CSCF is configured to determine, according to the received current service invoking status information and preset service compatibility associated description data, whether or not to allow invoking a second application server associated service described in the service compatibility associated description data; and invoke the second application server associated service, if the result of the determination indicates that the second application server is allowed to be invoked.

An S-CSCF for implementing service compatibility is provided, and the S-CSCF includes: a message receiving module, a service triggering module, a service compatibility processing module and a message sending message.

Specifically, the message receiving module is configured to receive an invocation request reply message carrying current service invoking status information returned by a first server and send it to the service triggering module and the service compatibility processing module.

The message triggering module is configured to obtain information of the second application server to be triggered from contents of the invocation request reply message from the message receiving module, request the service compatibility processing module to determine whether or not to allow invoking the second application server, and notify the message sending module to send an invocation request message to the second application server, if the result of the determination indicates that the second application server is allowed to be invoked.

The service compatibility processing module is configured to obtain current service invoking status information from contents of the invocation request reply message received from the message receiving module, determine, according to the current service invoking status information and preset service compatibility associated description data, whether or not to allow invoking the second application server requested by the service triggering module, and send the result of the determination to the service triggering module.

The message sending module is configured to receive the notification sent by the service triggering module and send an invocation request message to the second application server.

An application server (AS) for implementing service compatibility is provided, and the AS includes: an invocation request message receiving module, a service processing module, a current service invoking status information generating module and an invocation request reply message sending module.

Specifically, the invocation request message receiving module is configured to receive an invocation request message from an S-CSCF.

The service processing module is configured to execute a service process according to contents of the invocation request message from the invocation request message receiving module.

The current service invoking status information generating module is configured to generate a current service invoking status information according to the result of the service process of the service processing module.

The invocation request reply message sending module is configured to attach the current service invoking status information from the current service invoking status information generating module into an invocation request reply message and send it to the S-CSCF.

### BRIEF DESCRIPTION OF THE DRAWINGS

Figure 1 illustrates an embodiment of a system for implementing service compatibility;

Figure 2 illustrates an embodiment of an S-CSCF apparatus;

Figure 3 illustrates an embodiment of an AS apparatus;

Figure 4 illustrates an embodiment of a flow of a method for implementing service compatibility; and

Figure 5 illustrates an embodiment of a specific flow of a method for implementing service compatibility.

### DETAILED DESCRIPTION

According to embodiments of the present invention, an S-CSCF receives the actual invoking status information of the current service that is carried in an invocation request reply message returned by an AS, and determines, according to the actual invoking status of a current service and the preset description data associated with service compatibility, whether or not to allow invoking.

Hereinafter, systems, provided in embodiments of the present invention, for implementing service compatibility, are described.

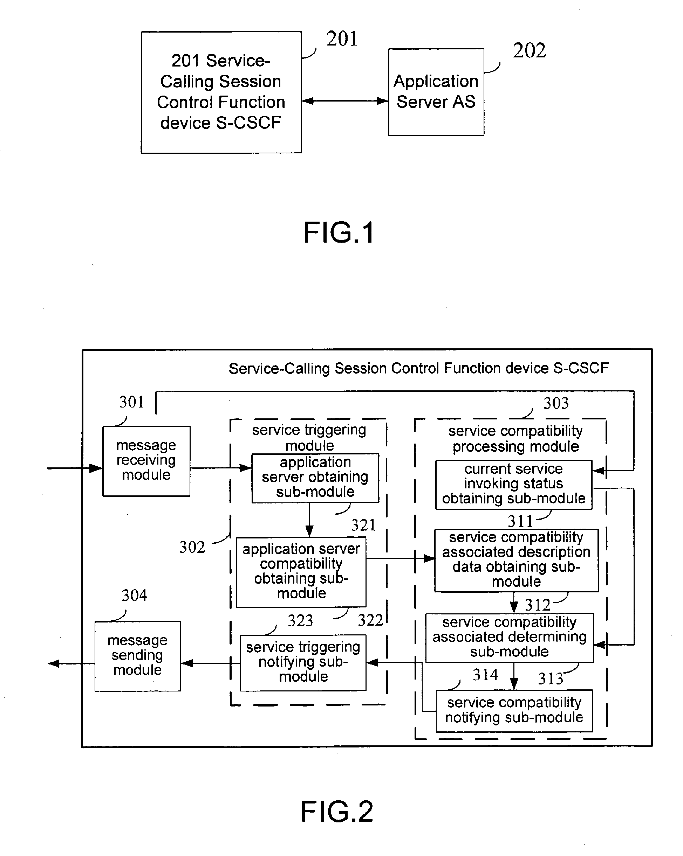

The embodiment of Figure 1 provides a system for implementing service compatibility. As illustrated in Figure 1, the system includes an S-CSCF 201 and an AS 202.

The S-CSCF 201 is configured to: provide a session control and register service; store service data of users; receive an SIP initial request message; execute iFC; obtain an address of a corresponding AS 202; receive an invocation request reply message returned by the AS 202; determine, according to the current service invoking status information in the invocation request reply message and the preset description data associated with service compatibility, whether or not to allow invoking services associated with other application server and described in service compatibility association description data; and send an invocation request message to the AS to which this associated service corresponds, if the result of the determination indicates that the second application server is allowed to be invoked.

Specifically, the iFC includes service invoking conditions and corresponding Application Servers (AS), the service invoking conditions are described by Service Point Trigger (SPT), and contents of the SPT includes: Request-Universal Resource Identity (Request-URI), identifying resources that the SIP initial request points to; SIP Method, indicating type of the SIP initial request; SIP Header, including information relating to the SIP initial request that might be any SIP header and header contents therein; Session Case, having three possible values, i.e., Originating, Terminating_Registered, Terminating_Unregistered; Session Description that is field contents of any Session Description Protocol (SDP) in the SIP method.

The AS 202 is configured to receive the invocation request message sent by the S-CSCF 201, perform corresponding service process, return an invocation request reply message to the S-CSCF 201, and carry current service invoking status information.

Hereinafter, the S-CSCF and AS provided by an embodiment are described in detail.

The embodiment of Figure 2 provides an S-CSCF apparatus. As illustrated in Figure 2, the S-CSCF apparatus includes: a message receiving module 301, a service triggering module 302, a service compatibility processing module 303 and a message sending module 304.

The message receiving module 301 is configured to receive the invocation request reply message returned by AS 202, and send it to the service triggering module 302.

The message triggering module 302 is configured to obtain the information of the AS to be triggered from contents of the invocation request reply message from the message receiving module 301, request the service compatibility processing module 303 to determine whether or not to allow invoking this AS, and notify the message sending module 304 to send an invocation request message to this AS, if the result of the determination is allowance.

The service triggering module 302 further includes an application server obtaining sub-module 321, an application server compatibility obtaining sub-module 322, and a service trigger notifying sub-module 323.

The application server obtaining sub-module 321 is configured to receive contents of the invocation request reply message from the message receiving module 301 to obtain the information of the AS to be triggered.

The application server compatibility obtaining sub-module 322 is configured to request the service compatibility processing module 303 to determine whether or not to allow invoking the AS.

The service trigger notifying sub-module 323 is configured to receive the result of determination sent by the service compatibility processing module 303, and notify the message sending module 304 to send the invocation request message to the application server, when the AS is allowed to be invoked.

The service compatibility processing module 303 is configured to: obtain current service invoking status information from contents of the invocation request reply message received from the message receiving module 301; determine, according to received current service invoking status information and preset service compatibility associated description data, whether or not to allow invoking the AS requested by the service triggering module 302; and send the result of the determination to the service triggering module 302.

In particular, the service compatibility processing module 303 further includes a current service invoking status information obtaining sub-module 311, a service compatibility associated description data obtaining sub-module 312, a service compatibility associated determining sub-module 313, and a service compatibility notifying sub-module 314.

The current service invoking status information obtaining sub-module 311 is configured to obtain current service invoking status information from contents of the invocation request reply message received from the message receiving module 301.

The service compatibility associated description data obtaining sub-module 312 is configured to obtain the service compatibility associated description data to which the AS in the request for determining from the service triggering module 302 corresponds.

The service compatibility associated determining sub-module 313 is configured to: determine, according to the current service invoking status information matching the service compatibility associated description data to which the AS corresponds, whether or not to allow invoking the AS; and send the result of the determination to the service compatibility notifying sub-module 314.

For example, if the current service invoking status information successfully matches the service compatibility associated description data corresponding to the AS, then it is determined that the AS is allowed to be invoked; otherwise, it is determined that the AS is not allowed to be invoked.

The service compatibility notifying sub-module 314 is configured to notify the service triggering module 302 of the result of the determination sent by the service compatibility associated determining sub-module 313.

In practice, the service compatibility processing module 303 can further include a current service invoking status information recording sub-module, which is configured to record the current service invoking status information in contents of the invocation request reply message sent by the message receiving module 301.

The message sending module 304 receives the notification sent by the service triggering module 302 and sends an invocation request message to the AS.

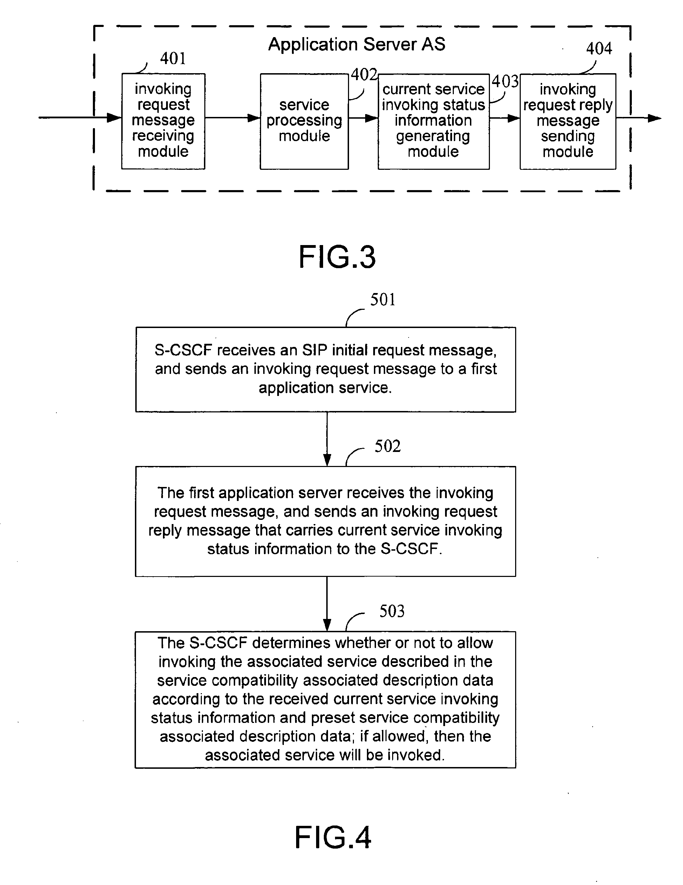

The embodiment of Figure 3 provides an AS apparatus. As illustrated in Figure 3, the AS apparatus includes: an invocation request message receiving module 401, a service processing module 402, a current service invoking status information generating module 403 and an invocation request reply message sending module 404.

The invocation request message receiving module 401 is configured to receive an invocation request message from an S-CSCF, and send it to the service processing module 402.

The service processing module 402 is configured to execute a service process according to contents of the invocation request message from the invocation request message receiving module 401.

The current service invoking status information generating module 403 is configured to generate a current service invoking status information according to the result of the service process of the service processing module 402.

The invocation request reply message sending module 404 is configured to attach the current service invoking status information from the current service invoking status information generating module 403 into an invocation request reply message and send it to the S-CSCF.

The embodiment of Figure 4 provides a method flow for implementing service compatibility. As illustrated in Figure 4, the method flow includes the following steps:

In Step 501, an S-CSCF receives an SIP initial request message, and sends to a first application service AS1 an invocation request message.

In this step, after receiving the SIP initial request message, the S-CSCF may obtain a corresponding AS1 address based on the execution of a first service trigger filtering rule, e.g., iFC1, and send the invocation request message to the AS1. The invocation request message can be an SIP initial request message, or can carry first service compatibility description information configured in the iFC.

In practice, the service compatibility description information includes compatibility levels. Further, the service compatibility description information may include a compatibility check initiating indication and/or index for service compatibility associated description data, wherein the compatibility check initiating indication is configured to indicate whether or not to initiate a compatibility check for current service trigger filtering rule; when the service compatibility associated description data is an independent preset data, the index for service compatibility associated description data is configured to act as an index, so that when service compatibility associated description data that the current service trigger filtering rule corresponds to is obtained in the independent preset data, the index for service compatibility associated description data may be the compatibility levels, and may be an index that is set independently.

In Step 502, the AS1 receives the invocation request message, executes corresponding service process, and sends an invocation request reply message that carries the current service invoking status information to the S-CSCF.

In this step, the invocation request reply message sent by the AS1 may be any one of the SIP messages, e.g., an SIP initial request message, an SIP response message etc.; the carried current service invoking status information includes service invoking status indications, e.g., an indication of "service execution succeeded" or "service execution failed"; or can include the invoked service information and corresponding service invoking status indications, in which

The invoked service information at least includes invoked service category information and/or invoked service compatibility description information. In practical applications, since one or more services can be provided on the AS1, when there are more than one service provided on the AS1, the compatibility levels of such services might be different. For example, three services in total (S1, S2, and S3) are provided on the AS1, in which S1 and S2 have the same compatibility level C1 while S3 has a compatibility level C2. In this step, AS1 only executes service S1, so that the current service invoking status information may further include the compatibility level of S1 and/or C1.

When the current service invoking status information includes the invoked service compatibility description information, the AS1 is required to obtain the service compatibility description information in advance. The method for the AS1 to obtain the service compatibility description information can be as follows: the AS1 obtains based on the service compatibility description information carried in the invocation request message, and configures the service compatibility description information in the iFC1 that the AS1 corresponds to; or the AS1 may also obtain based on preset data, which describes a corresponding relationship between the service invoked by the AS1 and the compatibility description information to which the service belongs, for example, S1 service corresponds to the compatibility level C1 and S3 service corresponds to the compatibility level C2.

When the current service invoking status information includes the invoked service category information, the AS1 is required to obtain the invoked service category information in advance. The method for the AS1 to obtain the invoked service category information can be as follows: the AS1 obtains, based on the invoked service category information carried in the invocation request message, and configures the invoked service category information in the iFC1 that the AS1 corresponds to; or the AS1 may also obtain based on a preset program, which describes a corresponding relationship between the service invoked by the AS1 and the invoked service category information to which the service belongs, for example, AS1 invokes the S1 service, and the preset program presents the invoked service category information corresponding thereto. Accordingly, if the current service invoking status information includes service invoking status indication being explicit or implicit, when the service invoking status indication is an explicit indication, an example of the invocation request reply message is as follows:

```
          Record-Route: <sip:as 1.home1.net; executed-flag=ture>
```

In the above example, in the "Record-Route" header of the invocation request reply message returned by the AS1, the address of the AS1 "sip:as 1.home1.net" and the current service invoking status information "executed-flag" that is "true" to indicate the AS1 successfully invoked the service are included. Meanwhile, the service invoking status indication is a flag, the value "true" of which represents that the service is invoked successfully, i.e., the service invoking status indication is an explicit indication.

When the service invoking status indication is an implicit indication, an example of the invocation request reply message is as follows:

```
          Record-Route: <sip:as 1.home1.net; executed-id=345mnp>
```

In the above example, in the "Record-Route" header of the invocation request reply message returned by the AS1, the address of the AS1 "sip:as 1.home1.net" and the current service invoking status information "executed-id" that is "345mnp" to indicate the AS1 successfully invokes the service are included. Meanwhile, the service invoking status indication is a label, the value "345mnp" of which per se does not represent whether the service invoking succeeds or fails, i.e., the service invoking status indication is an implicit indication. The value may be generated by the AS1, may be generated by the S-CSCF and brought to the AS1 via the invocation request message, or may be configured in the iFC1 that the AS1 corresponds to and brought to the AS1 via the invocation request message. The value of the label can correspond to one application server in one iFC, or can correspond to one service provided by one application server in one iFC, or can correspond to one service compatibility level of the service provided by one application server in one iFC.

When the current service invoking status information includes the invoked service information and corresponding service invoking status indication, an example of the invocation request reply message can be as the following implicit example:

```
          Record-Route: <sip:as 1.home1.net; executed-info=C1>
```

In the above example, in the "Record-Route" header of the invocation request reply message returned by the AS1, the address of the AS1 "sip:as 1.home1.net" and the current service invoking status information "executed-info" that is "C1" to indicate the AS1 successfully invoked the service with the compatibility level C1 are included. Meanwhile, the invoked service information implicitly indicates the invoking status of the service, i.e., the service invoking status indication is an implicit indication, and the service invoking status indication can be represented as the following explicit example:

```
          Record-Route: <sip:as 1.home1.net; executed-info=C1; executed-flag=true>
```

In the above example, in the "Record-Route" header of the invocation request reply message returned by the AS1, the address of the AS1 "sip:as 1.home1.net", the current service invoking status information "executed-info" that is "C1" to indicate the AS1 successfully invoked the service with the compatibility level C1, and the service invoking status indication "executed-flag" that is "true" to indicate the service is successfully invoked.

In Step 503, the S-CSCF determines, according to the received current service invoking status information and preset service compatibility associated description data, whether or not to allow invoking the associated service described in the service compatibility associated description data. If allowed, then the associated service will be invoked.

In this step, the S-CSCF obtains and processes the current service invoking status information from the received invocation request reply message. The methods for processing are as follows:

Method 1: The service invoking status indication is an explicit indication, and the S-CSCF then can determine, according to the value of the service invoking status indication, whether the current service is invoked successfully. For instance, if the value of the service invoking status indication is "true", then it is determined that the service is successfully invoked.

Method 2: The service invoking status indication is an implicit indication, and the S-CSCF determines, according to parse or comparison of the current service invoking status information, whether the current service is invoked successfully. For instance, the S-CSCF can parse the invoked service information to determine whether the current service is invoked successfully. An example of the invocation request reply message received by the S-CSCF is as follows:

```
           Record-Route: <sip:as 1.home1.net; executed-info=C1>
```

The S-CSCF parses the invoked service compatibility description information "C1" to determine that the service that "C1" corresponds to is successfully invoked.

Alternatively, the S-CSCF can compare the implicit service invoking status indication to determine whether the current service is successfully invoked. As described above, the implicit service invoking status indication may be the invoked service information and/or label, i.e., to determine whether the current service is successfully invoked by comparing the invoked service information and/or label. To be specific, the invoked service compatibility description information and the invoked service category information in the invoked service information can be from the invocation request message sent by the S-CSCF. As such, the S-CSCF compares contents of the invocation request message sent thereby and contents of the invocation request reply message, so as to determine whether the current service is successfully invoked. An example of the invocation request message sent by the S-CSCF is as follows:

```
          Route: <sip:as 1.home1.net; srv-info=S1>
```

An example of the invocation request reply message received by the S-CSCF is as follows:

```
          Record-Route: <sip:as 1.home1.net; srv-info=S1>
```

In the above examples, "srv-info" is the invoked service category information, the value of which is "S1". The S-CSCF compares to see whether the information segment including the invoked service information in the invocation request message appears in contents of the invocation request reply message, e.g., to determine whether contents, such as "S1" or "srv-info=S1 ", in the invocation request message appear in contents of the invocation request reply message. If so, then it is determined that the S1 service is successfully invoked.

Alternatively, the S-CSCF can compare the implicit service invoking status indication as label, to determine whether the current service is successfully invoked. As described above, value of the label in the invocation request reply message can come from the invocation request message sent by the S-CSCF. As such, the S-CSCF compares contents of the invocation request message sent thereby and contents of the invocation request reply message, so as to determine whether the current service is successfully invoked. An example of the invocation request message sent by the S-CSCF is as follows:

```
           Route: <sip:as 1.home1.net; executed-id=345mnp>
```

An example of the invocation request reply message received by the S-CSCF is as follows:

```
          Record-Route: <sip:as 1.home1.net; executed-id=345mnp>
```

The S-CSCF compares to see whether the information segment including value of the label in the invocation request message appears in contents of the invocation request reply message, e.g., to determine whether contents, such as "345mnp" or "executed-id=345mnp", in the invocation request message appear in contents of the invocation request reply message. If so, then it is determined that the service that the value of the label corresponds to is successfully invoked.

In this step, the S-CSCF can decide whether to initiate a compatibility check operation according to "compatibility check initiating indication", the compatibility check operation determines whether or not to allow invoking the associated service through the current service invoking status information and the preset service compatibility associated description data, the indication may be preset in corresponding service trigger filtering rule, such as a identity, or be the index for service compatibility associated description data, or be the service compatibility associated description data preset in the service trigger filtering rule.

In this step, based on the different purposes of the compatibility check, there are two specific implementing methods. Method 1 is to check whether or not to allow invoking the AS described by the executed iFC; and method 2 is to check which iFC will be executed in the next step. When a network supports both of these two methods, the S-CSCF can distinguish to initiate the compatibility check of method 1 or method 2 based on a certain indication, such as different "compatibility check initiating indication". The two specific implementing methods are described respectively below.

In Step 503, the specific implementing method 1:

After receiving the invocation request reply message from AS1, the S-CSCF executes second service trigger filtering rule, such as iFC2, for second service, to obtain the address of second application server AS2 and corresponding service compatibility associated description data. The S-CSCF matches the service compatibility associated description data that the AS2 corresponds to according to the current service invoking status information to determine whether or not to allow invoking the AS2. At this time, the S-CSCF can decide whether to initiate an operation according to "compatibility check initiating indication", such as the indication in iFC2, the operation determines whether or not to allow invoking the AS2 through the match between the current service invoking status information and the service compatibility associated description data.

In practice, there are two methods for the S-CSCF to obtain the service compatibility associated description data that the AS2 corresponds to. Method 1: the service compatibility associated description data to which the AS2 corresponds is preset in the second service trigger filtering rule that the AS2 corresponds to, the S-CSCF executes the second service trigger filtering rule to obtain the address of the AS2 and corresponding service compatibility associated description data. Method 2: the service compatibility associated description data that the AS2 corresponds to is independently preset, the S-CSCF executes the second service trigger filtering rule to obtain the address of the AS2 and corresponding service compatibility description information, the S-CSCF matches the service compatibility associated description data that is independently preset according to the service compatibility description information that the AS2 corresponds to so as to obtain the service compatibility associated description data that the AS2 corresponds to, in which the service compatibility associated description data that is independently preset might be user data related to a user, and the S-CSCF matches the data according to the service compatibility description information that the AS2 corresponds to and user identity; alternatively, the service compatibility associated description data that is independently preset may be data unrelated to the user, and the S-CSCF matches the data according to the service compatibility description information that the AS2 corresponds to.

In practice, the S-CSCF may also record the current service invoking status information for usage at the time of determining whether corresponding third application server is allowed to be invoked when a third service trigger filtering rule after the second service trigger filtering rule is executed.

In practice, the current service invoking status information that is used for matching the preset service compatibility associated description data can further include service invoking status information of more than one AS. For example, when executing subsequent third service trigger filtering rule, the S-CSCF obtains the address of the third application server AS3 and corresponding service compatibility associated description data; the S-CSCF matches the service compatibility associated description data that the AS3 corresponds to according to the current service invoking status information of AS1 and the current service invoking status information of AS2, and determines whether or not to allow to invoke AS3.

In practice, when only one AS to be triggered is described in the service trigger filtering rule, the service compatibility associated description data that the AS corresponds to is in fact the service compatibility associated description data that the service trigger filtering rule correspond to, e.g., the service compatibility associated description data that the AS2 corresponds to is the service compatibility associated description data that the iFC2 corresponds to. Meanwhile, the service compatibility associated description data that the AS2 corresponds to is actually the service compatibility associated description data that the compatibility level, to which the service provided by the AS at one invocation belongs, corresponds to. As the AS may provide more than one services with different compatibility levels at one invocation, the service compatibility associated description data that the AS corresponds to may include one or more the service compatibility associated description data that the compatibility level, to which the service provided by the AS at one invocation belongs, corresponds to. For instance, suppose AS2 may provide two services S4 and S5 with compatibility levels of C3 and C4 respectively at one invocation, then the service compatibility associated description data that the AS2 corresponds to includes the service compatibility associated description data that the C3 corresponds to and the service compatibility associated description data that the C4 corresponds to. The S-CSCF matches the service compatibility associated description data that the C3 and C4 correspond to, respectively. Only if both of S4 and S5 are not allowed invoking, the S-CSCF does not invoke the AS2; otherwise, it will still invoke the AS2 to supply the S4 or S5 service.

In Step 503, the specific implementing method 2:

After receiving the invocation request reply message from AS1, the S-CSCF matches according to the current service invoking status information and the service compatibility associated description data that the AS1 corresponds to, in order to determine whether or not to allow invoking the associated service described in the service compatibility associated description data. If allowed, then the associated service is invoked.

In practice, in step 501, after receiving the SIP initial request message, the S-CSCF may obtain the address of the AS1 and the service compatibility associated description data that the AS1 corresponds to based on the execution of the first service trigger filtering rule, such as iFC1; in step 503, the S-CSCF matches the current service invoking status information with the service compatibility associated description data that the AS1 corresponds to, and determines whether the second application server AS2 described in the service compatibility associated description data is allowed to be invoked. If allowed, then the second service trigger filtering rule that the AS2 corresponds to, such as iFC2, will be executed or the AS2 will be invoked directly. At this time, the S-CSCF may decide whether or not to initiate an operation according to "compatibility check initiating indication", such as the indication in iFC1, the operation determines whether or not to execute iFC2 through the match between the current service invoking status information and the service compatibility associated description data.

In practice, the invocation request message that the S-CSCF sent to the AS1 or the invocation request reply message the AS1 returned to the S-CSCF may act as the service trigger message, so as to match the second service trigger filtering rule, and, upon the success of the match, send the service trigger message to AS2.

In practice, in the service compatibility associated description data that the AS1 corresponds to, the describing manners for AS2 at least include one of the following: describing identity of the second service trigger filtering rule, describing the next service trigger filtering rule, describing the address of the AS2, describing the service compatibility description information that the AS2 or the second service trigger filtering rule corresponds to, etc. If the address of the AS2 is described, then corresponding second service trigger filtering rule are obtained based on the address or the AS2 is directly invoked. If the service compatibility description information to which the AS2 or the second service trigger filtering rule corresponds is described, then the corresponding second service trigger filtering rule are obtained based on the service compatibility description information. If the next service trigger filtering rule is described, then the next service trigger filtering rule with respect to the first service trigger filtering rule in sequence acts as the second service trigger filtering rule.

Similar to the above, in practice, the current service invoking status information that is used for matching the preset service compatibility associated description data can further include service invoking status information of more than one AS. For example, after receiving the invocation request reply message from the AS1, the S-CSCF matches with the service compatibility associated description data that the AS1 corresponds to, according to the current service invoking status information of the AS1 and the current service invoking status information of the third application server AS3, to determine whether or not to allow executing the second service trigger filtering rule.

Similar to the above, in practice, there are two methods for the S-CSCF to obtain the service compatibility associated description data that the AS1 corresponds to. Method 1: the service compatibility associated description data to which the AS1 corresponds is preset in the second service trigger filtering rule that the AS1 corresponds to, the S-CSCF executes the first service trigger filtering rule to obtain the address of the AS1 and corresponding service compatibility associated description data. Method 2: the service compatibility associated description data that the AS1 corresponds to is independently preset, the S-CSCF executes the first service trigger filtering rule to obtain the address of the AS1 and corresponding service compatibility description information, the S-CSCF matches the service compatibility associated description data that is independently preset according to the service compatibility description information that the AS1 corresponds to so as to obtain the service compatibility associated description data that the AS1 corresponds to. Thus, similar contents are omitted for brevity.

In step 503, in addition, the S-CSCF can still record the current service invoking status information, after all service triggers of current calls are completed (i.e., the execution of all service trigger filtering rules is completed), such as saving until the current call (SIP initial request message) is released. Of course, it may not record anymore. The S-CSCF may unconditionally continue recording the current service invoking status information, or may continue recording based on a certain indication, such as the iFC1 indicates the S-CSCF to record the current service invoking status information of the AS1.

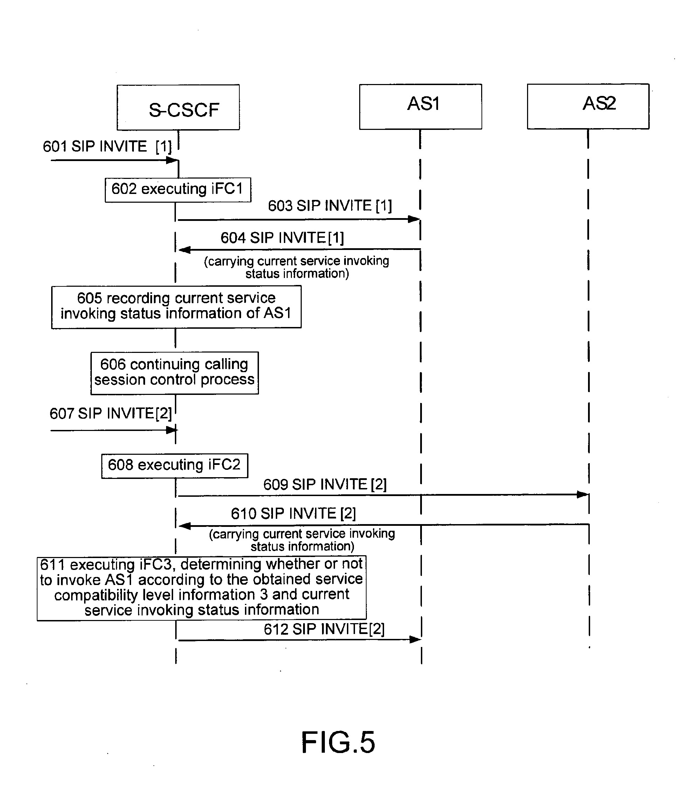

The embodiment of Figure 5 provides a specific flow of a method for implementing service compatibility. As illustrated in Figure 5, suppose IMS network includes S-CSCF, AS1 and AS2. The AS1 provides three services S1, S2 and S3, in which S1 and S2 have the same compatibility level C1 while S3 has a compatibility level C2. The AS2 also provides three services S4, S5 and S6, in which S4 and S6 have the same compatibility level C3 while S5 has a compatibility level C4. The service compatibility associated relationship between the C1, C2, C3, C4 that is described in the service compatibility associated description data is: the service that C2 corresponds to must be allowed invoking after the services that C1 and C4 correspond to are invoked, and the service that C2 corresponds to is forbidden from invoking after the service that C3 corresponds to is invoked. The flow includes the following steps:

In Step 601, the S-CSCF receives an incoming call sent to a user, and receives a SIP initial request message, SIP INVITE[1] invitation message.

In Step 602, the S-CSCF executes iFC1, and obtains address of corresponding application server AS1.

In this step, the S-CSCF receives the SIP initial request message, SIP INVITE[1] invitation message, executes iFC1, obtains address of corresponding application server AS1, and can also obtain the compatibility level to which the service to be invoked by the AS1 belongs at the same time; when obtaining the address of corresponding application server AS1 and the compatibility level to which the service to be invoked by the AS1 belongs, an example of the iFC1 executed by the S-CSCF is as follows:

```
 <ApplicationServer>
                     <ServerName>sip:as1.home1.net</ServerName>
                     <CompatibilityClass>C1</CompatibilityClass>
 </ApplicationServer>
```

In the above example, "C1" is the service compatibility description information1 that iFC1 corresponds to, which describes that the compatibility level to which the service to be invoked by the AS1 belongs is C1.

Or, the S-CSCF executes iFC1, can also obtain the service category information of the service to be invoked by the AS1 at the same time. At this time, the example of the iFC1 executed by the S-CSCF can be as follows:

```
 <ApplicationServer>
                     <ServerName>sip:as1.home1.net; srv-info=S1,S2</ServerName>
                     <CompatibilityClass>C1</CompatibilityClass>
 </ApplicationServer>
 or:
 <ApplicationServer>
                     <ServerName>sip:as1.home1.net; srv-info=S1</ServerName>
                     <CompatibilityClass>C1</CompatibilityClass>
                     <ServerName>sip:as1.home1.net; srv-info=S2</ServerName>
                     <CompatibilityClass>C1</CompatibilityClass>
 </ApplicationServer>
```

In the above example, "S1", "S2" are the service category information of the service to be invoked by the AS1, and "C1" is the service compatibility level corresponding thereto.

In Step 603, the S-CSCF sends an invocation request message, SIP INVITE[1] message, to AS1.

In this step, the compatibility level to which the service to be invoked by the AS1 belongs may be carried in the invocation request message. An example of the invocation request message is as follows:

```
          Route: <sip:as1.home1.net; executing-info=C1>
```

In the above example, in the "Route" header, the compatibility level to which the service to be invoked by the AS1 belongs is carried via "executing-info" parameter.

Or, the service category information to be invoked by AS1 can be carried in the invocation request message as well, and the S-CSCF puts the "ServerName" content in iFC1 into the "Route" header. An example of the invocation request message is as follows:

```
 Route: <sip:as1.home1.net; srv-info=S1,S2>
```

or the example as follows:

```
 Route: <sip:as1.home1.net; srv-info=S1>
```

```
 Route: <sip:as1.home1.net; srv-info=S2>
```

In Step 604, the AS1 receives invocation request message, SIP INVITE[1] message, and performs corresponding service process, invokes services S1 and S2, returns to the S-CSCF an invocation request reply message, SIP INVITE[1] message, carries current service invoking status information of the AS1.

In this step, the current service invoking status information of the AS1 may be a service invoking status indication, or, may also be invoked service information and corresponding service invoking status indication.

Description data that the compatibility level to which the invoked services S1 and S2 belong is C1 is preset on the AS1, or the AS1 can obtain the compatibility level to which the services to be invoked belong via received invocation request message, as such, when the AS1 successfully invokes service S1 and/or S2, the sent current service invoking status information carries the compatibility level to which the invoked services belong. This embodiment explains in the manner that the current service invoking status information of the AS1 is the invoked service information and corresponding service invoking status indication, an example of the invocation request reply message sent by the AS1 is as follows:

```
          Record-Route: <sip:as1.home1.net; executed-info=C1>
```

In the above example, the "Record-Route" header of the invocation request reply message returned by the AS1 includes the address of the AS1 "sip:as1.home1.net", and current service invoking status information "executed-info" that is "C1" to indicate that the AS1 successfully invokes the service with the compatibility level of C1.

In practice, in step 603, the S-CSCF generates an information segment describing the compatibility level in the "Route" header, sends it to the AS1. In step 604, when the AS1 successfully invokes service S1 and/or S2, the received information segment describing the compatibility level can be placed in the "Record-Route" header in statu quo and returned to the S-CSCF. To be specific, in step 603, the information segment describing the compatibility level in the "Route" header is "executing-info=C1". In step 604, after the AS1 successfully invokes the service, contents of the information segment are directly taken as contents in the "Record-Route" header to be sent, an example is as follows:

```
          Record-Route: <sip:as1.home1.net; executing-info=C1>
```

Or, the AS1 takes the invoked service category information as current service invoking status information, an example of the invocation request reply message sent by the AS1 is as follows:

```
          Record-Route: <sip:as1.home1.net; srv-info=S1>
```

In the above example, the AS1 has invoked service S1.

In Step 605, the S-CSCF receives the invocation request reply message, SIP INVITE[1] message, obtains and records the current service invoking status information of the AS1.

In this step, the S-CSCF receives the invocation request reply message, SIP INVITE[1] message, obtains the current service invoking status information of the AS1; i.e., the AS1 has successfully invoked a corresponding service with the compatibility level C1, may unconditionally record the current service invoking status information of the AS1, and can as well record according to an indication, such as the iFC1 indicates the S-CSCS to record the current service invoking status information of the AS1, the S-CSCF may record the current service invoking status information until the INVITE[1] message is released.

In this step, the S-CSCF may parse the invoked service information "C1" carried in the received INVITE[1] message, to obtain and record the current service invoking status information of the AS1. Alternatively, the S-CSCF may compare to see whether the information segment containing the invoked service information that is carried in the invocation request message sent thereby appears in the INVITE[1] message received thereby, to obtain and record the current service invoking status information of the AS1. For example, when the S-CSCF compares to see that the "C1" or "executing-info=C1 sent thereby appears in the INVITE[1] message received thereby, then it determines that the service that C1 corresponds to is invoked successfully. As another example, the S-CSCF compares to see that the "S1" or "srv-info=S1" sent thereby appears in the INVITE[1] message received thereby, then it determines that the S1 service is invoked successfully. Hereafter, the S-CSCF can know that the service compatibility level that the S1 corresponds to is C1 based on the configuration of the above-mentioned iFC1.

In Step 606, the S-CSCF continues subsequent calling session control process.

In this step, the S-CSCF continues subsequent calling session control process, such as subsequent iFC is executed, but the match does not succeed, the SIP INVITE[1] message will be routed to the user, and current calling is established. At this time, the S-CSCF still saves the recorded the current service invoking status information of the AS1, unconditionally or according to an indication.

In Step 607, the S-CSCF receives a new incoming call sent to the user, and receives another SIP initial request message, SIP INVITE[2] inviting message.

In Step 608, the S-CSCF executes iFC1, but the match does not succeed, and continues the execution of iFC2 to obtain address of the second application server AS2 to be triggered or address of the AS2 and corresponding service compatibility description information.

In this step, when obtaining the address of the second application server AS2 to be triggered and the corresponding service compatibility description information, an example of the iFC2 executed by the S-CSCF is as follows:

```
 <ApplicationServer>
                     <ServerName>sip:as2.home1.net</ServerName>
                     <CompatibilityClass>C3</CompatibilityClass>
                     <CompatibilityClass>C4</CompatibilityClass>
 </ApplicationServer>
```

In the above example, the iFC2 respectively gives the compatibility levels that the service that the AS2 might invoke corresponds to, "C3" and "C4" is the service compatibility description information 2 that the iFC2 corresponds to, which describes the compatibility level that the service that the AS2 might invoke corresponds to is C3 or C4.

The example of iFC2 executed by the S-CSCF may be as follows:

```
 <ApplicationServer>
                     <ServerName>sip:part1@as2.home1.net</ServerName>
                     <ServerName>sip:part2@as2.home1.net</ServerName>
 </ApplicationServer>
```

In the above example, the AS2 might invoke services with different compatibility levels in once invocation, and thus the iFC2 respectively gives service category information that the AS2 might invoke, part1 and part2 is the service category information that the iFC2 corresponds to.

An example of the iFC2 executed by the S-CSCF may also be as follows:

```
 <ApplicationServer>
                     <ServerName>sip:part1@as2.home1.net</ServerName>
                     <CompatibilityClass>C3</CompatibilityClass>
                     <ServerName>sip:part2@as2.home1.net</ServerName>
                     <CompatibilityClass>C4</CompatibilityClass>
 </ApplicationServer>
```

In the above example, the AS2 might invoke services with different compatibility levels in one invocation, and thus the iFC2 respectively gives service category information that the AS2 might invoke and corresponding compatibility levels, "C3" and "C4" are the service compatibility level description information 2 that the iFC2 corresponds to, which describes that the compatibility level to which the service to be invoked by the AS2 belongs is C3 or C4; part1 and part2 are service category information that the iFC2 corresponds to, which respectively correspond with C3 and C4.

In Step 609, the S-CSCF sends invocation request message, SIP INVITE[2] message to the AS2.

In this step, the compatibility level to which the service to be invoked by the AS2 belongs may be carried in the invocation request message, an example is as follows:

```
 Route: <sip:as2.home1.net; executing-info=C3,C4>
```

In the above example, the compatibility level to which the service compatibility description information to be invoked by the AS2 belongs is carried via the "executing-info" parameter in the "Route" header.

The invocation request message can also carry the service category information to be invoked by the AS2, an example is as follows:

```
 Route: <sip:part1@as2.home1.net>
```

```
 Route: <sip:part2@as2.home1.net>
```

In the above example, the service category information part1 and part2 is carried in the "Route" header.

The invocation request message may also carry the service category information to be invoked by the AS2 and corresponding compatibility level, an example is as follows:

```
 Route: <sip:part1@as2.home1.net; executing-info=C3>
```

```
 Route: <sip:part2@as2.home1.net; executing-info=C4>
```

In the above example, the compatibility level to which the service compatibility description information to be invoked by the AS2 belongs and corresponding service category information is carried via the "executing-info" parameter in the "Route" header.

In Step 610, the AS2 receives the invocation request message, SIP INVITE[2] message, and executes corresponding service process, invokes service S5, and returns to the S-CSCF an invocation request reply message, SIP INVITE[2] message, which carries the current service invoking status information of the AS2.

In this step, the current service invoking status information of the AS2 may be a service invoking status indication, or invoked service information and corresponding service invoking status indication.

Description data that the compatibility level to which the invoked service S4 and S6 belongs is C3 and the compatibility level to which the invoked service S5 belongs is C4 is preset on the AS2; alternatively, the AS2 may obtain the compatibility level to which the service to be invoked belongs, such as C3 and C4, via the received invocation request message. The correspondence relationship data that the invoked services S4 and S6 correspond to the compatibility level C3 and the invoked service S5 corresponds to the compatibility level C4 is preset on the AS2, alternatively, the AS2 obtains the service category information to be invoked, such as "part1" and "part2", via the received invocation request message. After the AS2 receives this invocation request message, it understands that the "part1" therein is to indicate to execute services S4 and S6, and the "part2" is to indicate to execute service S5. The description data that the compatibility level that the invoked service category information part1 and part2 correspond to is C3 and C4 respectively is preset on the AS2; alternatively, the AS2 may obtain the service category information to be invoked and the compatibility level belonged thereby, such as "part1" and C3 as well as "part2" and "C4", via the received invocation request message.

As such, when the AS2 successfully invokes the service S5, the compatibility level to which the invoked service belongs is carried in the sent current service invoking status information. This embodiment explains by means of the current service invoking status information as the invoked service information and corresponding service invoking status indication, an example of the invocation request reply message that is sent by the AS2 is as follows:

```
 Record-Route: <sip:as2.home1.net; executed-info=C4>
```

In the above example, in the "Record-Route" header of the invocation request reply message returned by the AS2, the address of the AS2 "sip:as2.home1.net" and current service invoking status information "executed-info" that is "C4" to indicate the AS2 successfully invoked the service with compatibility level C4 are included.

As described above, the AS2 may take the received information segment describing the compatibility level in the "Route" header that is "executing-info=C4" in statu quo as the information segment describing the compatibility level in the "Record-Route" header, the example is as follows:

```
 Record-Route: <sip:as2.home1.net; executing-info=C4>
```

In Step 611, the S-CSCF receives the invocation request reply message, to obtain the current service invoking status information of the AS2.

In this step, the S-CSCF receives the invocation request reply message, to obtain the current service invoking status information of the AS2, i.e., the AS2 successfully invoked corresponding service with the compatibility level C4.

The S-CSCF continues subsequent calling session control process, executes subsequent iFC, successfully matches iFC3, obtains corresponding address of AS1 and corresponding service compatibility description information 3, an example of the iFC3 is as follows:

```
 <ApplicationServer>
                     <ServerName>sip:as1.home1.net</ServerName>
                     <CompatibilityClass>C2</CompatibilityClass>
 </ApplicationServer>
```

In the above example, "C2" is the service compatibility description information 3 that iFC3 corresponds to, which describes that the compatibility level to which the service to be invoked belongs is C2, uses the compatibility level to be the index for service compatibility associated description data, the S-CSCF matches the service compatibility associated description data being independently preset based on the compatibility level C2 to which the service to be invoked belongs, or the S-CSCF matches the service compatibility associated description data being independently preset based on the compatibility level C2 to which the service to be invoked belongs and user identity, to obtain the service compatibility associated description data that the AS1 corresponds to "the service that C2 corresponds to must be allowed invoking after the services that C1 and C4 correspond to are invoked, and the service that C2 corresponds to is forbidden from invoking after the service that C3 corresponds to is invoked". In this embodiment, taking the service compatibility associated description data being independently preset as an example of the user data related to the user, the service compatibility associated description data being independently preset is described in eXtensible Mark-up Language (XML) as an example as follows:

```
       <UserIdentity>sip:mary@ims.example.com</UserIdentity>
       <CompatibilityClass>C2</CompatibilityClass>
       <AllowInvoking>
              <ConditionTypeCNF>1</ConditionTypeCNF>
              <Condition>
 <CompatibilityClass>C1</CompatibilityClass>
 <InvokingStatus>1</InvokingStatus>
 </Condition>
              <Condition>
 <CompatibilityClass>C4</CompatibilityClass>
 <InvokingStatus>1</InvokingStatus>
 </Condition>
 </AllowInvoking>
       <ForbidInvoking>
              <Condition>
 <CompatibilityClass>C3</CompatibilityClass>
 <InvokingStatus>1</InvokingStatus>
 </Condition>
 </ForbidInvoking>
```

In the above example, "UserIdentity" represents a user identity, that can be set as a specific user identity, such as the "sip:mary@ims.example.com" in the above example, or can be set as a wildcard manner that wildcards a type of or all of users; "CompatibilityClass" represents compatibility level, which is set to be C2; "AllowInvoking" represents service compatibility associated relationship that is allowed invoking, what is described between <AllowInvoking> and </AllowInvoking> is all conditions meeting this associated relationship; "ConditionTypeCNF" represents conditional combination utilizing regular expression, the value "1" represents that the following conditional combination is "AND"; "Condition" represents a condition that describes compatibility level and service current invoking status corresponding thereto; "InvokingStatus" represents the service current invoking status that the compatibility level corresponds to, the value "1" represents it is invoked. It can be seen that the description between <AllowInvoking> and </AllowInvoking> is that "the services that C1 and C4 correspond to are invoked"; "ForbidInvoking" represents the service compatibility associated relationship that is forbidden invoking, what is described between is "the service that C3 corresponds to is invoked".

Alternatively, if the service compatibility associated description data that the AS1 corresponds to is preset in iFC3, then the AS1 executes iFC3, so as to obtain corresponding address of AS1 and corresponding service compatibility associated description data preset, an example of the iFC3 is as follows:

```
 <ApplicationServer>
       <ServerName>sip:as1.home1.net</ServerName>
       <AllowInvoking>
              <ConditionTypeCNF>1</ConditionTypeCNF>
              <Condition>
 <CompatibilityClass>C1</CompatibilityClass>
 <InvokingStatus>1</InvokingStatus>
 </Condition>
             <Condition>
 <CompatibilityClass>C4</CompatibilityClass>
 <InvokingStatus>1</InvokingStatus>
 </Condition>
 </AllowInvoking>
      <ForbidInvoking>
             <Condition>
 <CompatibilityClass>C3</CompatibilityClass>
 <InvokingStatus>1</InvokingStatus>
 </Condition>
 </ForbidInvoking>
 </ApplicationServer>
```

Then, the S-CSCF judges whether the services that C1 and C4 correspond to have been invoked according to the service compatibility associated description data, and the result is "yes", meanwhile it judges whether the service that C3 corresponds to has been invoked, and the result is "no", complying with the service compatibility associated description data, so it triggers invoking the service that C2 corresponds to, i.e., the service S3 provided by the AS1.

In this step, after successfully matching iFC3 and obtaining corresponding address of the AS1, the S-CSCF can decide whether to initiate a compatibility check operation according to "compatibility check initiating indication", the compatibility check operation determines whether or not to allow invoking the AS1 through the current service invoking status information and the preset service compatibility associated description data, the instruction may be preset in iFC3, an example of segments of the iFC3 involving this indication is as follows:

```
 <ApplicationServer>
                    <ServerName>sip:as1.home1.net</ServerName>
                    <CompatibilityClass>C2</CompatibilityClass>
                    <StartCompatibilityChecking>1</StartCompatibilityChecking>
 </ApplicationServer>
```

In the above example, "StartCompatibilityChecking" represents "compatibility check initiating indication", value "1" represents to initiate the compatibility check of whether or not to allow invoking the AS described by the current iFC, value "0" represents not to initiate the compatibility check, and value "2" represents to initiate the compatibility check of which iFC will be executed next.

In this step, the current service invoking status information to which "the service that C1 corresponds to is invoked" corresponds is recorded by the S-CSCF in step 605. On the other side, the initial request message INVITE[2] processed by the S-CSCF in this step and the initial request message INVITE[1] processed by the S-CSCF in step 605 locate in two different sessions, but in IMS, one user can have a plurality of public user identities in different forms. These public user identities have identical subscribing service profile, i.e., these public user identities have "alias" relationship. Thus, although being the same user, in step 605 and this step, the user identities that the S-CSCF is currently processing might be different, for example, the user identity in step 605 is SIP URI, and the user identity in this step is tel URI. As such, in this step, the S-CSCF is required not only to obtain the current service invoking status information of the user identity being currently processed, but also to obtain the current service invoking status information of all user identities having an "alias" relationship with the user identity being currently processed. In step 612, the S-CSCF sends an invocation request message SIP INVITE[2] to the AS1.

In step 611 in the above embodiment, the compatibility check manner being used is the above mentioned "checking whether or not to allow invoking the AS described by the executed iFC". In addition, by using the compatibility check manner of "checking which iFC will be executed next", the step 611 in the above embodiment can be implemented equally. At this time, after the AS2 described by iFC2 is invoked, the S-CSCF can determine which iFC is allowed to be executed through the current service invoking status information and preset service compatibility associated description data. To be specific, in step 611, the S-CSCF receives the invocation request reply message to obtain the current service invoking status information of the AS2, and the S-CSCF initiates a compatibility check operation that the current service invoking status information and the service compatibility associated description data matches according to "compatibility check initiating indication", such as the indication preset in iFC2. The S-CSCF obtains the service compatibility associated description data corresponding to the AS2, the manner of obtaining is as above, which is omitted for brevity. This service compatibility associated description data describes "after the services that C1 and C4 correspond to are invoked and when the service that C3 corresponds to is not invoked, iFC3 (i.e., the service that C2 corresponds to) is executed", the match succeeds, the S-CSCF uses contents of INVITE[2] message to match iFC3, the match succeeds, and the address of the AS1 described by iFC3 is obtained, then step 612 is executed.

In the embodiment, the examples C1, C2, C3 and C4 of service compatibility level are expression regarding service compatibility information. In practice, they may be in any forms, such as number, letter or any combination. In the above example, the service compatibility information is preset in corresponding iFC, the embodiment further allows the service compatibility information to be preset in other locations, such as data that Public Service Identity (PSI) corresponds to. The PSI also represents the invocation to application server AS. The PSI can have corresponding iFC, and implement the invocation of AS according to this iFC, or can have no corresponding iFC. If the PSI has corresponding iFC, then the service compatibility information can be preset in corresponding iFC; if the PSI has no corresponding iFC, then the service compatibility information can be directly preset in data that the PSI corresponds to.

In addition, when the service compatibility associated description data that is independently preset is used as the user data related to the user, its user identity can be any arbitrary combination of user identities in any type, such as private identity, public identity, etc.

In addition, the above mentioned invocation request reply message explicitly carries the current service invoking status information, the embodiments may allow implicitly carries the current service invoking status information. For example, the invocation request reply message per se represents the current service invoking status information. For example, the name of the invocation request reply message returned by the application server per se represents current service invoking status. For example, the invocation request reply message is an SIP failure response code message that represents the current service status is "failure", or the invocation request reply message is a SIP initial request message that has the same name and locates in the same session as the invocation request message, such as INVITE message, to represent the current service invoking status is "success". Meanwhile, moreover, the S-CSCF may be identified that it can determine the current service invoking status via the name of the invocation request reply message of the application server by setting a label in the iFC describing the application server, in which the basis for determining the correspondence relationship between the name of the invocation request reply message and the current service invoking status has the following three circumstances: the S-CSCF determines which name of the message corresponds to "success" or "failure" by itself as described above, or the correspondence relationship is preset in the iFC, or the label indicates the invocation request reply message always corresponds to "success" or "failure" as default. Distinguishingly, when the AS does not return the invocation request reply message, i.e., the S-CSCF has not received the reply message within a certain period after the S-CSCF sends the invocation request message, the S-CSCF will regard the current service invoking status that the AS corresponds to as "failure". As another example, when the AS successfully invoked the service, the returned invocation request reply message carries the "Record-Route" header containing its own address information, but when the AS failed to invoke the service, the returned invocation request reply message does not carry the "Record-Route" header containing its own address information. Thereby, the S-CSCF determines the current service invoking status of the AS when it receives the invocation request reply message.

Moreover, as shown in the embodiments, the service that the current service invoking status information corresponds to and the associated service described in the service compatibility associated description data can locate in different sessions or in different calls, for example, in step 603, the invocation request message to the AS1 (SIP INVITE[1] message) is an invoke for the service that the current service invoking status information corresponds to, and in step 612, the invocation request message to the AS1 (SIP INVITE[2] message) is an invoke for the associated service described in the service compatibility associated description data, and the two invocation request message locate in different sessions.

The embodiments further allow the service that the current service invoking status information corresponds to and the associated service described in the service compatibility associated description data to serve different users, e.g., the current service invoking status information that the AS6 subscribed by user A corresponds to matches with preset service compatibility associated description data to determine whether or not to allow invoking the AS7 subscribed by user B that is described in the service compatibility associated description data. At this point, the current service invoking status information described in the service compatibility associated description data might associate with different user identities, a segment of a service profile subscribed by user B is illustrated as follows:

```
 <ServiceProfile>
       <Identity>sip:user-B@home.net</Identity>
       ....................
       <ApplicationServer>
              <ServerName>sip:as7.home1.net</ServerName>
              <AllowInvoking>
                     <Condition>
 <CompatibilityClass>C6</CompatibilityClass>
 <UserIdentity>sip:user-A@home.net</UserIdentity>
 <InvokingStatus>1</InvokingStatus>
 </Condition>
 </AllowInvoking>
 </ApplicationServer>
 ....
 </ServiceProfile>
```

In the above example, "ServiceProfile" represents the service profile of the subscribing user, "Identity" represents the user identity of the subscribing user with the value of "sip:user-B@home.net", i.e., user identity of the user B, this service profile includes description of iFC that the AS7 subscribed by the user B corresponds to, giving the address name of the AS7 "sip:as7.home1.net" and corresponding service compatibility associated description data. In this service compatibility associated description data, it is described that the condition to allow invoking the AS7 is that the service subscribed by user A with a compatibility level C6 is successfully invoked. "UserIdentity" is the identity of the user served by the service that C6 corresponds to, the value of which is "sip:user-A@home.net", i.e., the user identity of user A, i.e., the service compatibility associated description data can describe current service invoking status information of different users.

Alternatively, the associated service described in the service compatibility associated description data might associate with different user identities, a segment of a service profile subscribed by user A is illustrated as follows:

```
 <ServiceProfile>
      <Identity>sip:user-A@home.net</Identity>
       ....................
      <ApplicationServer>
             <ServerName>sip:as6.home1.net</ServerName>
             <AllowInvoking>
                    <Condition>
 <CompatibilityClass>C6</CompatibilityClass>
 <InvokingStatus>1</InvokingStatus>
 </Condition>
 <InvokingServer>
      <UserIdentity>sip:user-B@home.net</UserIdentity>
      <iFC>7</iFC>
 </InvokingServer>
 </AllowInvoking>
 </ApplicationServer>
 .................
 </ServiceProfile>
```

In the above example, "ServiceProfile" represents the service profile subscribed by user A, the value of "Identity" is "sip:user-A@home.net", i.e., user identity of the user A, this service profile includes description of iFC that the AS6 subscribed by the user A corresponds to, giving the address name of the AS6 "sip:as6.home1.net" and corresponding service compatibility associated description data. In this service compatibility associated description data, it is described that the AS7 subscribed by user B is allowed to be invoked when the AS6 is successfully invoked, in the invoking condition, C6 is the compatibility level that the AS6 corresponds to. "InvokingServer" represents the application server allowed to be invoked when the invoking condition (i.e., current service invoking status information) is met, in which the value of "UserIdentity" is "sip:user-B@home.net", i.e., user identity of user B. The value of iFC is 7, i.e., an identity of a service trigger filtering rule subscribed by user B, the application server that the service trigger filtering rule corresponds to is the AS7.

In addition, what needs to be explained is that in step 611 of the above embodiment, the instance of the S-CSCF processing a user with user identities in different forms in different sessions is described, but in actual application, even if in the same session, the user identity may change due to service process of the application server; as long as they have identical subscribing service profile, the S-CSCF will still treat them as the same user for service compatibility process, e.g., still executing processes, such as iFC matching, with the initial user identity.

In addition, what needs to be explained is that in the above-mentioned embodiment, the service compatibility description information corresponds to the service trigger filtering rule, the S-CSCF executes the service trigger filtering rules to obtain corresponding service compatibility description information. Further, in the embodiment, the S-CSCF is allowed to obtain the service compatibility description information without execution of the service trigger filtering rule. For example, the user per se is allowed to have default service compatibility description information, e.g., set in profile of the user, the S-CSCF obtains this default service compatibility description information at the time of registering of the user. The default service compatibility description information of the user is generally used for determining whether or not to allow invoking the application server described by the first iFC that successfully matches with the current initial request message. For example, the user has a default compatibility level C0; the S-CSCF, when processing a user session, executes the first iFC1 to obtain the compatibility level C1 that the iFC1 corresponds to, the corresponding service compatibility associated description data is "if C0 exists, then the service that C1 corresponds to is not invoked", and thus the S-CSCF does not invoke the application server described by the iFC1.

In addition, what needs to be explained is that in the above-mentioned embodiment, the S-CSCF obtains current service invoking status information from the invocation request reply message returned by the AS, but in the embodiment, it is allowed that the AS is not triggered for invoking by the S-CSCF, e.g., other network element, such as Service Broker, IM-SSF (IP multimedia-service switch function), invokes an AS, the invocation request reply message returned by this AS is sent to the S-CSCF, and then the S-CSCF obtains current service invoking status information therefrom.

In addition, what needs to be explained is that in the above-mentioned embodiment, the invoked service information and service invoking status indication are included in Router header and "Record-Route" header, but in the embodiment, it is also allowed that the invoked service information and service invoking status indication are included in other headers or message bodies of SIP message. Taking message bodies as an example, the invoked service information is configured in iFC, an example is as follows:

```
 <ApplicationServer>
                     <ServerName>sip:as1.home1.net</ServerName>
                     <ServiceInfo>
                           <ServiceKey>
 <ServiceName>S1</ServiceName>
                                  <CompatibilityClass>C1</CompatibilityClass>
                           </ServiceKey>
                           <ServiceKey>
 <ServiceName>S2</ServiceName>
                                  <CompatibilityClass>C2</CompatibilityClass>
                           </ServiceKey>
                    </Servicelnfo>
 </ApplicationServer>
```

In the above example, contents between <ServiceInfo> and </ServiceInfo> is the service information to be invoked. There might be a plurality of service information to be invoked, the contents between <ServiceKey> and </ServiceKey> is one service information to be invoked, in which, "ServiceName" describes the invoked service category information, "CompatibilityClass" describes corresponding invoked service compatibility description information, the S-CSCF executes iFC to obtain the service information to be invoked, and adds it into the message body of the invocation request message, an example is as follows:

```
 Content-Type: application/serviceinfo+xml
 ............................
                     <ServiceInfo>
                            <ServiceKey>
 <ServiceName>S1</ServiceName>
                                   <CompatibilityClass>C1</CompatibilityClass>
                            </ServiceKey>
                            <ServiceKey>
 <ServiceName>S2</ServiceName>
                                   <CompatibilityClass>C2</CompatibilityClass>
                            </ServiceKey>
                     </ServiceInfo>
```

In the above example, "Content-Type" header provides type name of the message body "application/serviceinfo".

The application server receives the invocation request message. If the service is invoked successfully, then the "ServiceInfo" contents previously obtained are added into the message body of the invocation request reply message as invoked service information, an example is as follows:

```
 Content-Type: application/serviceinfo+xml
 ............................
                    <ServiceInfo>
                           <ServiceKey>
 <ServiceName>S1</ServiceName>
                                  <CompatibilityClass>C1</CompatibilityClass>
                           </ServiceKey>
                    </ServiceInfo>
```

The S-CSCF parses or compares the invoked service information to determine whether the service is invoked successfully. In the above example, the S-CSCF compares the sent and received "ServiceInfo" contents, to know that the service that C1 corresponds to is invoked successfully, while the service that C2 corresponds to is not invoked successfully.

What needs to be explained at last is that in the embodiment, the service compatibility associated relation data regarding whether or not to allow invoking an application server might have a plurality of pieces in corresponding service compatibility associated description data. Logical relationship, such as "AND", "OR", "NOT" and any combination thereof, or priority order relationship etc., exists between the plurality of pieces of service compatibility associated relation data. For example, the above-mentioned service compatibility associated relation data that C2 corresponds to have two pieces: "being allowed invoking after the services to which C1 and C4 correspond are invoked", and "being forbidden from invoking after the service that C3 corresponds to is invoked". These two pieces of service compatibility associated relation data have priority order relationship therebetween, i.e., the "being forbidden from invoking after the service that C3 corresponds to is invoked" is processed first, and then "being allowed invoking after the services that C1 and C4 correspond to are invoked" will be processed. Further, for example, the service compatibility associated relation data that C5 corresponds to have two pieces: "being allowed invoking after the service that C6 corresponds to is invoked", or "being allowed invoking after the service that C8 corresponds to is invoked", i.e., these two pieces of service compatibility associated relation data have logical relationship "OR" therebetween.

As can be seen from the above, the embodiments of method and system for implementing service compatibility determine whether or not to allow invoking other services, according to actual invoking status of current service and preset service compatibility associated description data, by receiving by an S-CSCF the actual invoking status information of the current service that is carried in an invocation request reply message returned by an AS, so as to solve the problem that the plurality of services provided by the AS conflict with one another and solve the compatibility invoke of IMS network service; meanwhile, the S-CSCF may determine whether the service provided on the AS is successfully invoked through the invocation request reply message returned by the AS, in order to avoid a problem that the S-CSCF fails to process the service compatibility; and they accommodate the requirement on diversity of service development by setting multidimension of service compatibility level.

The preferred embodiments described above explain purposes, solutions and advantages of the present invention in detail. It shall be understood that what is described above is merely preferred embodiments of the present invention, not used for limiting the present invention. Any modification, equivalent substitution, improvement etc. based on the spirit and principle of the present invention shall fall within the protection scope thereof.

## Claims

1. A method for implementing service compatibility, **characterized in that** the method comprises:
sending, by an Service-Calling Session Control Function (S-CSCF), an invocation request message to a first application server;
receiving, by the S-CSCF, an invocation request reply message carrying current service invoking status information returned by the first application server; and
determining, by the S-CSCF, according to the received current service invoking status information and preset service compatibility associated description data, whether or not to allow invoking a second application server associated service described in the service compatibility associated description data; and invoking the second application server associated service, if the result of the determination indicates that the second application server is allowed to be invoked.

2. The method of claim 1, **characterized in that** the service compatibility associated description data comprises service compatibility associated description data of the first application server or service compatibility associated description data of the second application server.

3. The method of claim 1, **characterized in that,** the determining, by the S-CSCF, according to the received current service invoking status information and preset service compatibility associated description data, whether or not to allow invoking a second application server associated service described in the service compatibility associated description data; and invoking the second application server associated service, if the result of the determination indicates that the second application server is allowed to be invoked comprises:
obtaining, by the S-CSCF, address of the second application server to be triggered from contents of the invocation request reply message; and
determining, by the S-CSCF, according to the current service invoking status information matching with the preset service compatibility associated description data, whether or not to allow invoking the second application server; and sending a second invocation request message to the second application server, if the result of the determination indicates that the second application server is allowed to be invoked.

4. The method of claim 1, **characterized in that,** after invoking the second application server associated service, the method further comprises: recording, by the S-CSCF, the current service invoking status information, unconditionally or according to a predetermined indication of the preset data.

5. The method of claim 1, **characterized in that,** the determining, by the S-CSCF, according to the received current service invoking status information and preset service compatibility associated description data, whether or not to allow invoking a second application server associated service described in the service compatibility associated description data; and invoking the second application server associated service, if the result of the determination indicates that the second application server is allowed to be invoked comprises:
obtaining, by the S-CSCF, the preset service compatibility associated description data that the first application server corresponds to; and
determining, by the S-CSCF, according to the current service invoking status information matching with the service compatibility associated description data, whether or not to allow invoking the second application server described in the service compatibility associated description data; and if the result of the determination indicates that the second application server is allowed to be invoked, executing a service trigger filtering rule that the second application server corresponds to, and sending a second invocation request message to the second application server after the execution matches successfully, or directly sending the second invocation request message to the second application server.

6. The method of claim 1, **characterized in that,** the determining, by the S-CSCF, according to the received current service invoking status information and preset service compatibility associated description data, whether or not to allow invoking a second application server associated service described in the service compatibility associated description data; and invoking the second application server associated service, if the result of the determination indicates that the second application server is allowed to be invoked comprises:
obtaining, by the S-CSCF, a second application server to be triggered and preset service compatibility associated description data that the second application server corresponds to; and
determining, by the S-CSCF, according to the current service invoking status information matching with the service compatibility associated description data that the second application server corresponds to, whether or not to allow invoking the second application server to be triggered; and sending an invocation request message to the second application server, if the result of the determination indicates that the second application server is allowed to be invoked.

7. The method of claim 6, **characterized in that,**
the S-CSCF executes a second service trigger filtering rule that the second application server corresponds to, to obtain the second application server to be triggered and the service compatibility associated description data that the second application server corresponds to; or
the S-CSCF executes the service trigger filtering rule to obtain the second application server to be triggered and the service compatibility description information that the second application server corresponds to, and the S-CSCF obtains the service compatibility associated description data that the second application server to be triggered corresponds to according to the service compatibility description information matching with the preset service compatibility associated description data.

8. The method of claim 6, **characterized in that,** the method further comprises:
determining, by the S-CSCF, whether or not to allow invoking the second application server to be triggered according to one or more pieces of service invoking status information of the invoked first application server matching with the service compatibility associated description data; and sending an invocation request message to the second application server, if the result of the determination indicates that the second application server is allowed to be invoked.

9. The method of claim 1, **characterized in that,** the determining, by the S-CSCF, according to the received current service invoking status information and preset service compatibility associated description data, whether or not to allow invoking a second application server associated service described in the service compatibility associated description data; and invoking the second application server associated service, if the result of the determination indicates that the second application server is allowed to be invoked comprises:
obtaining, by the S-CSCF, current service invoking status information of the invoked first application server; and
determining, by the S-CSCF, according to the current service invoking status information matching with the service compatibility associated description data that the first application server corresponds to, whether or not to allow executing an associated service described in the service compatibility associated description data; if allowed, then executing the associated service.

10. The method of claim 9, **characterized in that,** the S-CSCF executes the service trigger filtering rule to obtain address of the invoked first application server and the service compatibility associated description data that the first application server corresponds to.

11. The method of claim 9, **characterized in that,** the method further comprises:
determining, by the S-CSCF, whether or not to allow executing the associated service described in the service compatibility associated description data according to one or more pieces of service invoking status information of the invoked first application server matching with the service compatibility associated description data; and executing the associated service, if the result of the determination indicates that the second application server is allowed to be invoked.

12. The method of claim 9, **characterized in that,** the determining whether or not to allow executing an associated service described in the service compatibility associated description data; and executing the associated service, if the result of the determination indicates that the second application server is allowed to be invoked comprises:
determining whether or not to allow executing the service trigger filtering rule that the second application server to be triggered described in the service compatibility associated description data corresponds to; and executing the service trigger filtering rule, if the result of the determination indicates that the second application server is allowed to be invoked; or
determining whether or not to allow invoking the second application server to be triggered described in the service compatibility associated description data; and invoking the second application server to be triggered, if the result of the determination indicates that the second application server is allowed to be invoked.

13. A system for implementing service compatibility, comprising an Service-Calling Session Control Function (S-CSCF) and a first application server, wherein the S-CSCF is configured to send an invocation request message to the first application server; the first application server is configured to receive the invocation request message and send an invocation request reply message to the S-CSCF, and the system is **characterized in that,**
the first application server is further configured to carry current service invoking status information in the invocation request reply message sent to the S-CSCF; and
the S-CSCF is configured to: determine, according to the received current service invoking status information and preset service compatibility associated description data, whether or not to allow invoking a second application server associated service described in the service compatibility associated description data; and invoke the second application server associated service, if the result of the determination indicates that the second application server is allowed to be invoked.

14. The system of claim 13, **characterized in that,** the S-CSCF is further configured to: obtain address of the second application server to be triggered from contents of the invocation request reply message; determine, according to the current service invoking status information matching with the preset service compatibility associated description data, whether or not to allow invoking the second application server; and send a second invocation request message to the second application server, if the result of the determination indicates that the second application server is allowed to be invoked.

15. An S-CSCF for implementing service compatibility, **characterized in that,** the S-CSCF comprises a message receiving module, a service triggering module, a service compatibility processing module and a message sending message, wherein
the message receiving module is configured to receive an invocation request reply message carrying current service invoking status information returned by a first application server and send it to the service triggering module and the service compatibility processing module;
the service triggering module is configured to: obtain information of a second application server to be triggered from contents of the invocation request reply message from the message receiving module; request the service compatibility processing module to determine whether or not to allow triggering the second application server; and notify the message sending module to send an invocation request message to the second application server, if the determination result indicates that the second application server is allowed to be triggered;
the service compatibility processing module is configured to: obtain current service invoking status information from contents of the invocation request reply message from the message receiving module; determine, according to the current service invoking status information and preset service compatibility associated description data, whether or not to allow invoking the second application server requested by the service triggering module; and send the determination result to the service triggering module; and
the message sending module is configured to receive the notification sent by the service triggering module and send an invocation request message to the second application server.

16. The S-CSCF of claim 15, **characterized in that,** the service triggering module further comprises: an application server obtaining sub-module, an application server compatibility obtaining sub-module, a service trigger notifying sub-module, wherein
the application server obtaining sub-module is configured to receive contents of the invocation request reply message from the message receiving module to obtain information of the second application server to be triggered;
the application server compatibility obtaining sub-module is configured to query the service compatibility processing module of whether or not to allow triggering the second application server; and
the service trigger notifying sub-module is configured to receive the determination result sent by the service compatibility processing module, and notify the message sending module to send the invocation request message to the second application server, when the second application server is allowed to be triggered.

17. The S-CSCF of claim 15, **characterized in that,** the service compatibility processing module further comprises a current service invoking status information obtaining sub-module, a service compatibility associated description data obtaining sub-module, a service compatibility associated determining sub-module, and a service compatibility notifying sub-module, wherein
the current service invoking status information obtaining sub-module is configured to obtain current service invoking status information from contents of the invocation request reply message from the message receiving module;
the service compatibility associated description data obtaining sub-module is configured to obtain the service compatibility associated description data that the second application server in the request for determining from the service triggering module corresponds to;
the service compatibility associated determining sub-module is configured to determine whether or not to allow invoking the second application server according to the current service invoking status information matching the service compatibility associated description data, and send the determination result to the service compatibility notifying sub-module; and
the service compatibility notifying sub-module is configured to notify the service triggering module of the determination result sent by the service compatibility associated determining sub-module.

18. The S-CSCF of claim 15 or 17, **characterized in that,** the service compatibility processing module further comprises: a current service invoking status information recording sub-module, which is configured to record the current service invoking status information in contents of the SIP message sent by the message receiving module.

19. An application server (AS) for implementing service compatibility, **characterized in that,** the AS comprises: an invocation request message receiving module, a service processing module, a current service invoking status information generating module and an invocation request reply message sending module, wherein
the invocation request message receiving module is configured to receive an invocation request message from an S-CSCF;
the service processing module is configured to execute a service process according to contents of the invocation request message from the invocation request message receiving module;
the current service invoking status information generating module is configured to generate a current service invoking status information according to the result of the service process of the service processing module; and
the invocation request reply message sending module is configured to attach the current service invoking status information from the current service invoking status information generating module into an invocation request reply message and send it to the S-CSCF.
